# FASCICULE DE BREVET EUROPEEN

(11) **EP 1 398 983 B1**
(45) Date de publication et mention de la délivrance du brevet: **11.07.2007**
(21) Numéro de dépôt: 03102734.5
(22) Date de dépôt: 11.09.2003
(51) Int. Cl.: H04Q 7/32

(54) **Procédé de mise à jour à distance d'un logiciel embarqué dans un téléphone mobile et système de mise en oeuvre**
Fernprogrammierungsverfahren eines Mobiltelefons und System dafür
Method for remotely programming a mobile phone and implementation system

(30) Priorité: 12.09.2002 FR 0211343
(43) Date de publication de la demande: 17.03.2004
(73) Titulaire: SAGEM Communication, 75015 Paris (FR)
(72) Inventeur: GRESSE, Philippe, 95490, VAUREAL (FR)
(74) Mandataire: Schmit, Christian Norbert Marie

(56) Documents cités:
- EP-A- 0 459 344
- EP-A- 0 804 045
- WO-A-01/17214
- WO-A-01/33867
- GB-A- 2 256 113
- GB-A- 2 350 749
- US-A- 5 349 697

## Description

### Domaine de l'invention et état de la technique

L'invention concerne un procédé pour mettre à jour, à distance, un logiciel embarqué dans un téléphone mobile en téléchargeant des données de mise à jour stockées dans un serveur de données. Ce procédé peut être mis en oeuvre par un particulier qui télécharge les données de mise à jour pour son propre téléphone mobile ou bien par un centre de réparation qui télécharge les données de mise à jour pour plusieurs téléphones mobiles provenant du même constructeur de téléphones mobiles. L'invention concerne aussi un système permettant de mettre en oeuvre ce procédé.

L'invention trouve des applications dans le domaine de la téléphonie mobile et, en particulier, dans le domaine de la mise à jour des logiciels de téléphones mobiles.

Les fonctionnalités des téléphones mobiles évoluent très rapidement. Il est donc intéressant, pour l'utilisateur d'un téléphone mobile, de pouvoir mettre à jour les fonctionnalités de son téléphone mobile, régulièrement. Actuellement, les mises à jour du logiciel d'un téléphone mobile peuvent se faire de plusieurs façons :
- le téléphone mobile est rapatrié chez le constructeur du téléphone. Les frais d'expédition, d'une part, et les frais de mise à jour par une personne qualifiée, d'autre part, entraîne un coût élevé pour le constructeur. En outre, le téléphone mobile est indisponible pour l'utilisateur, pendant le temps d'expédition et le temps de mise à jour.
- une personne qualifiée est envoyée par le constructeur chez l'utilisateur pour mettre à jour le téléphone mobile. Les frais de mise à jour et de déplacement de cette personne entraînent également un coût élevé pour le constructeur.

De même, lorsqu'un téléphone mobile est défectueux, l'utilisateur est obligé, soit de retourner son téléphone mobile chez le constructeur, avec les inconvénients énoncés précédemment, soit d'apporter son téléphone mobile dans un centre de réparation agréé par le constructeur (CRA) qui fait déplacer une personne qualifiée ou bien qui expédie le téléphone défectueux au constructeur avec, là aussi, les inconvénients évoqués précédemment.

**Une autre solution est décrite dans le document** GB - A - 2 350 749 **qui propose un dispositif permettant de transférer des données de configuration d'un serveur vers un téléphone mobile.**

Une autre solution consiste à faire télécharger, par l'utilisateur, les données de mise à jour dans son téléphone mobile en se connectant à un serveur de données dédié à la mise à jour. Cette solution est peu coûteuse pour le constructeur et permet, à l'utilisateur, de conserver son téléphone mobile. Elle présente, toutefois, l'inconvénient d'être non sécurisée.

En effet, généralement, les mises à jour proposées sur le serveur du constructeur de téléphones mobiles sont distribuées par un réseau de communication, tel que le réseau Internet, et ne sont, par conséquent, pas sécurisées. Il y a donc des risques qu'un fraudeur récupère des mises à jour sur son propre téléphone mobile alors qu'il n'a pas le droit à ces mises à jour. En effet, chaque constructeur de téléphones mobiles introduit, dans le logiciel embarqué d'un téléphone mobile, des verrous qui autorisent ou interdisent l'accès à certaines fonctionnalités et/ou services du téléphone. Si la mise à jour du logiciel embarqué se fait de façon non sécurisée, un fraudeur peut télécharger dans son propre téléphone mobile des données des mises à jour non autorisées par le constructeur pour ce téléphone mobile et destinées au téléphone d'un autre utilisateur. Le fraudeur a ainsi la possibilité d'utiliser des fonctions ou services qui seront facturés à l'utilisateur.

De plus, pour télécharger des mises à jour, l'utilisateur utilise directement son téléphone mobile. Les mises à jour sont téléchargées directement du serveur dans la mémoire flash du téléphone mobile, c'est-à-dire dans la mémoire principale du téléphone mobile. Aussi, si l'utilisateur fait une erreur dans les opérations à effectuer pour télécharger les données de mise à jour, la mémoire flash se bloque et devient inopérante. Le téléphone mobile est alors inutilisable. L'utilisateur est, de ce fait, obligé de faire rapatrier son téléphone mobile chez le constructeur du téléphone mobile pour le faire réparer et pour faire la mise à jour.

Lorsque les données de mise à jour sont importantes, en capacité mémoire, il peut être impossible de télécharger ces données de mise à jour dans la mémoire flash du téléphone mobile. En effet, la mémoire flash d'un téléphone mobile est généralement d'environ 4 Mo. Certaines mises à jour peuvent nécessiter une capacité de mémorisation proche de 4 Mo ou supérieure à 4 Mo. Or, l'utilisateur doit télécharger, dans son téléphone mobile, non seulement les données des mises à jour, mais aussi le programme permettant l'exécution de ces mises à jour par le téléphone mobile. Ce programme d'exécution, à lui seul, peut nécessiter une capacité de mémorisation de l'ordre de 4 Mo. Dans ce cas, il est impossible de télécharger toutes les informations (données de mise à jour + programme d'exécution) dans la mémoire flash du téléphone portable. Dans ce cas, la seule façon connue pour mettre à jour le logiciel du téléphone mobile est de changer le composant contenant le logiciel du téléphone mobile. Un tel changement ne peut se faire qu'en usine, avec tous les inconvénients que cela entraîne et qui ont été cités précédemment.

### Exposé de l'invention

L'invention a justement pour but de remédier aux problèmes énoncés précédemment. A cette fin, elle propose un procédé sécurisé pour mettre à jour un logiciel embarqué dans un téléphone mobile, en téléchargeant indirectement les données de mise à jour depuis un serveur de données dédié à la mise à jour de téléphones mobiles. Ce procédé utilise une mémoire auxiliaire connectée à la mémoire flash du téléphone mobile, cette mémoire auxiliaire ayant pour rôle de stocker les données de mise à jour et le programme d'exécution et de transmettre ces informations, bloc par bloc, à la mémoire flash du téléphone mobile. Cette mémoire auxiliaire peut être, par exemple, la mémoire d'un ordinateur de type PC. Pendant que les mises à jour et le programme d'exécution sont stockées dans la mémoire auxiliaire, la mémoire flash du téléphone mobile peut alors être utilisée pour authentifier le téléphone mobile auprès du serveur de données. L'authentification du téléphone mobile permet au constructeur de vérifier si le téléphone mobile a bien le droit de télécharger la mise à jour qu'il demande. Cette authentification sécurise le procédé de mise à jour.

De plus, l'utilisation d'une mémoire auxiliaire permet de ne pas télécharger directement les informations dans la mémoire flash du téléphone mobile, de sorte que, si l'utilisateur fait une erreur dans les opérations de téléchargement des données de mise à jour, alors la mémoire flash n'est pas inopérante et le téléphone mobile peut continuer à fonctionner comme avant l'essai de téléchargement. L'utilisateur a alors la possibilité de recommencer les opérations de téléchargement.

De façon plus précise, l'invention concerne un procédé de mise à jour à distance d'un logiciel embarqué dans un téléphone mobile, dans lequel le téléphone mobile télécharge des données de mise à jour mémorisées dans une première base de données d'un serveur de données par l'intermédiaire d'une mémoire d'ordinateur connectée à une mémoire flash du téléphone mobile, caractérisé en ce que :
- le téléchargement des données de mise à jour est demandé par un utilisateur du téléphone mobile au serveur de données, lorsque l'utilisateur souhaite mettre à jour son téléphone mobile,
- à réception de cette demande, le serveur transmet une application de gestion de dialogue à la mémoire d'ordinateur,
- la mémoire d'ordinateur exécute cette application et transmet au téléphone mobile une demande d'informations d'identité contenue dans ladite application,
- le téléphone mobile transmet les informations d'identité demandées au serveur, par l'intermédiaire de la mémoire d'ordinateur,
- le serveur vérifie ces informations par comparaison avec des informations d'identité mémorisées dans une seconde base de données dudit serveur et transmet les données de mise à jour à la mémoire d'ordinateur,
- la mémoire d'ordinateur stocke les données de mise à jour et transmet lesdites données de mise à jour à la mémoire flash du téléphone mobile.

Ce procédé de mise à jour peut être mis en oeuvre par un particulier. Dans ce cas, le procédé se caractérise par le fait que les données de mise à jour sont transmises par le serveur à l'ordinateur après authentification du téléphone mobile par le serveur. Cette authentification comporte les étapes suivantes :
- lorsque l'ordinateur a envoyé au serveur une demande de téléchargement des données de mise à jour, le serveur demande à l'ordinateur de lui transmettre des informations d'identité du téléphone mobile,
- l'ordinateur transmet cette demande d'informations au téléphone mobile,
- le téléphone mobile recherche ces informations d'identité, les chiffre et les transmet à l'ordinateur, qui les retransmet au serveur,
- le serveur déchiffre ces informations d'identité et les vérifie.

Le procédé de l'invention peut également être mis en oeuvre par un centre de réparation qui met à jour les logiciels de plusieurs téléphones mobiles formant une même famille de téléphones mobiles. Dans ce cas, le procédé se caractérise par le fait que les données de mise à jour sont transmises, par le serveur à l'ordinateur, sous une forme chiffrée au moyen d'une clé de famille générée par le serveur.

L'invention concerne aussi un système de mise à jour à distance d'un logiciel embarqué dans un téléphone mobile comportant un serveur de données stockant les données de mise à jour, connecté à un réseau de communication, caractérisé en ce que le téléphone mobile est connecté, via le réseau de communication, au serveur de données par l'intermédiaire d'une mémoire auxiliaire.

### Brève description des figures

La figure 1 représente le système permettant de mettre en oeuvre le procédé de l'invention.
La figure 2 représente les différents échanges d'informations entre le téléphone mobile et le serveur du constructeur de téléphones dans le cas où l'utilisateur est un particulier qui télécharge des données de mise à jour pour son propre téléphone mobile.

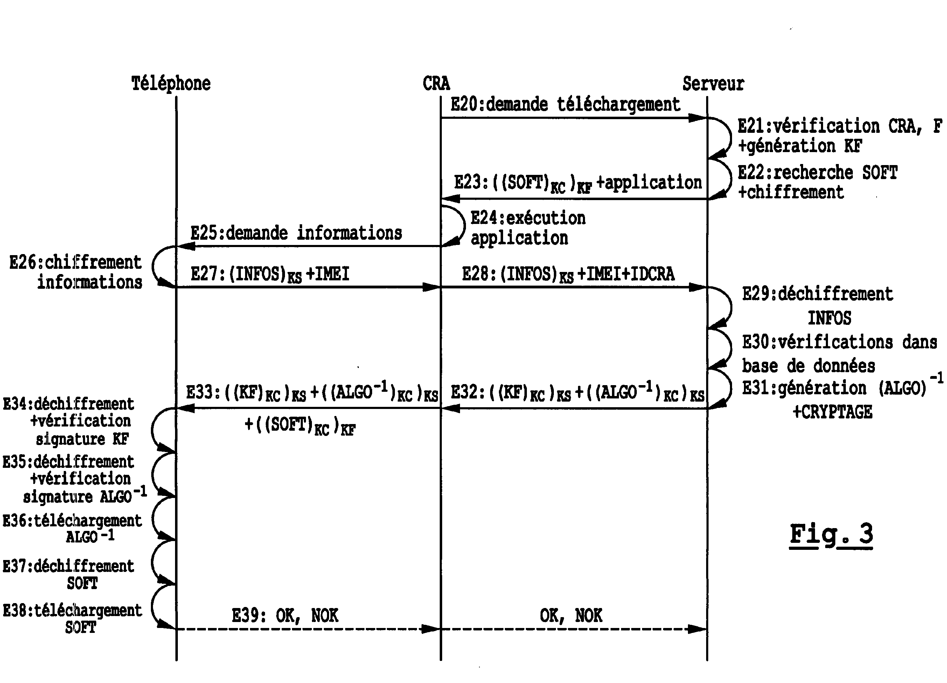

La figure 3 représente l'échange d'informations entre un téléphone mobile et le serveur du constructeur de téléphones, dans le cas où l'utilisateur est un centre de réparation.

### Description détaillée de modes de réalisation de l'invention

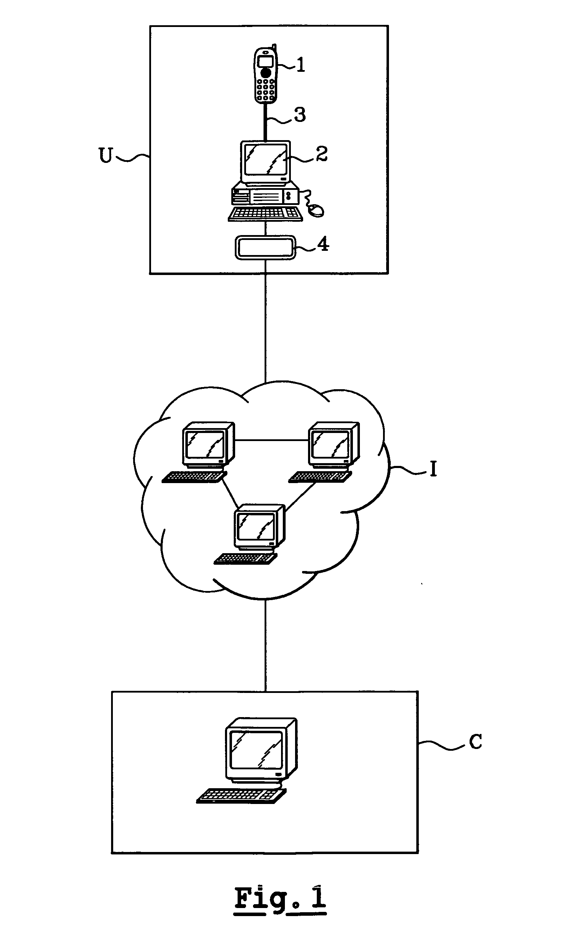

La figure 1 montre le système permettant de mettre en oeuvre le procédé de l'invention. Ce système comporte trois ensembles d'éléments qui peuvent être distants les uns des autres et qui sont référencés U, I et C.

Le premier élément est un serveur de données C dédié à la mise à jour des téléphones mobiles d'un constructeur. Généralement, ce serveur de données C est installé chez le constructeur. Le serveur de données comporte une première base de données contenant toutes les données de mise à jour possibles, ainsi que les programmes d'exécution de ces mises à jour. Il comporte une seconde base de données contenant toutes les informations relatives à l'identification des téléphones mobiles fabriqués et/ou mis dans le commerce par le constructeur. Le serveur comporte, en outre, une unité de gestion du dialogue avec le téléphone mobile.

Autrement dit, le serveur stocke, en plus des données de mise à jour et des programmes d'exécution de ces mises à jour, les données nécessaires à l'authentification de chaque téléphone mobile du constructeur et les données particulières relatives à un téléphone. Parmi ces données, il y a, par exemple, des données d'identification des téléphones mobiles, des données relatives au propriétaire du téléphone mobile, des verrous propres à chaque téléphone mobile, etc.

Le système comporte, par ailleurs, un ensemble d'éléments U, installé chez l'utilisateur. Un utilisateur peut être un particulier possédant un téléphone mobile ou bien un centre de réparation ayant plusieurs téléphones mobiles à mettre à jour.

L'ensemble d'éléments U comporte, d'une part, un téléphone mobile 1 qui constitue le terminal de l'ensemble et, d'autre part, un ordinateur 2, par exemple de type PC. Le téléphone mobile 1 est relié à l'ordinateur, par exemple, par un cordon de données 3. Il peut aussi être connecté à l'ordinateur 2 par voie hertzienne, par voie infrarouge ou par toute liaison connue entre un ordinateur et un terminal. L'ordinateur 2 est lui-même connecté à un modem 4 lui permettant d'accéder au réseau de communication I et, en particulier, au réseau Internet. Le réseau de communication I constitue le troisième élément du système. Il assure la liaison entre le téléphone mobile 1, via l'ordinateur 2, et le serveur de données C.

Dans une variante du système de l'invention, l'ordinateur peut être remplacé par une mémoire auxiliaire connectée au téléphone mobile. Dans ce cas, le téléphone mobile comporte, en plus de sa mémoire flash, une mémoire auxiliaire qui lui permet de stocker au moins 4 Mo de façon intermédiaire. En effet, le fait d'avoir une capacité de stockage en deux parties permet de stocker de façon intermédiaire les données de mise à jour.

Ainsi, un utilisateur qui souhaite mettre à jour son téléphone mobile se connecte sur le site Internet du constructeur et, donc, se connecte au serveur C du constructeur. Le site du constructeur propose à l'utilisateur de télécharger une application de gestion de dialogue. L'utilisateur exécute alors cette application qui détermine l'identité du téléphone mobile. Lorsque l'identité du téléphone mobile a été obtenue, elle est retournée au serveur du constructeur, de préférence automatiquement. Elle peut aussi être retournée manuellement, dans un formulaire rempli par l'utilisateur. Le serveur vérifie cette identité en la comparant aux données mémorisées dans sa seconde base de données et prépare le ou les fichiers nécessaires à la mise à jour. Ces fichiers constituent le rétrofit du téléphone mobile. Ces fichiers sont fournis à l'unité de gestion du dialogue avec le téléphone mobile, qui assure leur transfert vers le téléphone mobile. Celui-ci, par l'intermédiaire de l'ordinateur 2, télécharge ces fichiers.

Ce système met en oeuvre le procédé de l'invention, selon deux modes de réalisation différents. Dans le premier mode de réalisation, l'utilisateur est un particulier qui cherche à mettre à jour son propre téléphone mobile. Dans le second mode de réalisation, l'utilisateur est un centre de réparation qui cherche à mettre à jour plusieurs téléphones mobiles du même constructeur et, en particulier, plusieurs téléphones mobiles appartenant à une même famille de téléphones mobiles. Cette notion de famille de téléphones mobiles sera décrite de façon plus détaillée par la suite.

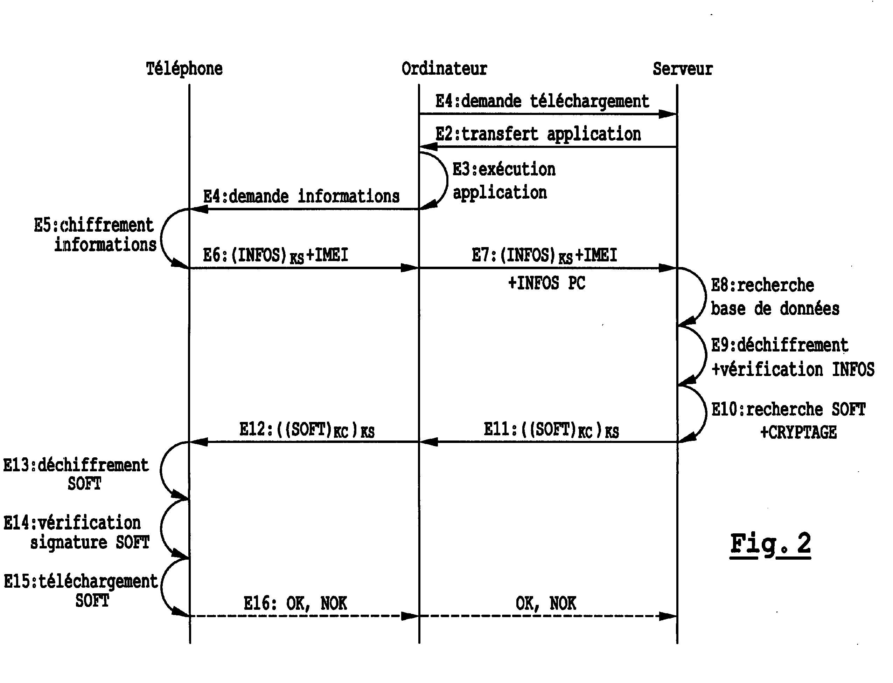

L'échange d'informations, selon le premier mode de réalisation, entre les éléments de l'utilisateur U et les éléments du constructeur C, par l'intermédiaire du réseau Internet I, est représenté sur la figure 2.

Dans ce premier mode de réalisation où l'utilisateur est un particulier, le procédé de mise à jour des données est le suivant :

L'utilisateur, à partir de son ordinateur, se connecte, par le réseau Internet, au serveur de données C du constructeur de téléphones mobiles. Lorsque la connexion est établie, l'utilisateur demande au serveur C, toujours par l'intermédiaire de l'ordinateur, le téléchargement d'un fichier de mises à jour (étape E1). A réception de cette demande, le serveur C envoie une application à l'ordinateur (étape E2). Cette application contient un programme à exécuter. Lorsqu'il reçoit cette application, l'ordinateur l'exécute, c'est-à-dire qu'il exécute (étape E3) le programme contenu dans l'application. Ce programme contient une demande d'informations relatives au téléphone mobile. L'ordinateur transmet (étape E4) cette demande d'informations au téléphone mobile.

Ces informations peuvent être l'identité du téléphone mobile, ou toutes autres informations privées, connues uniquement du téléphone mobile et du serveur C, et qui permettent d'identifier le téléphone et son utilisateur.

L'une de ces informations est l'IMEI (International Mobile Station Equipement Identity, en termes anglo-saxons) du téléphone mobile, c'est-à-dire le numéro d'immatriculation du téléphone mobile. En effet, il faut savoir que tout constructeur de téléphones mobiles insère, dans chaque téléphone mobile, une information qui correspond à une carte d'identité du téléphone mobile. Cette carte d'identité, que l'on appelle IMEI, est connue uniquement du téléphone mobile et du serveur du constructeur.

D'autres informations, référencées INFOS, sont, par exemple, la version logicielle implantée dans le téléphone mobile, les verrous de la carte SIM (Subscriber Identification Module, en termes anglo-saxons), le numéro de séquence, etc.

Ces informations sont mémorisées dans le téléphone mobile ou dans la carte SIM de façon sécurisée et doivent être transmises également de façon sécurisée. Aussi, pour éviter qu'un éventuel fraudeur puisse intercepter ces informations, le téléphone mobile chiffre ces informations (étape E5) avant de les transmettre à l'ordinateur.

Le chiffrement de ces informations est fait, par le téléphone mobile, au moyen d'un algorithme de chiffrement et d'une clé secrète KS. Cette clé secrète est connue à la fois du serveur C et du téléphone mobile. De préférence, l'algorithme de chiffrement est un algorithme symétrique. Ainsi, le même algorithme et la même clé secrète peuvent être utilisés, aussi bien par le serveur C que par le téléphone mobile, pour chiffrer un message à transmettre ou déchiffrer un message reçu chiffré. Le serveur C utilise alors la même clé secrète KS et le même algorithme de chiffrement que le téléphone mobile pour déchiffrer les informations reçues chiffrées du téléphone mobile.

Dans ce cas, il y a une seule et unique clé par téléphone mobile. En pratique, cette clé secrète KS est mémorisée « en dur » dans le téléphone mobile, de sorte qu'elle est non modifiable. Par exemple, la clé secrète peut être insérée, soit dans le silicium du circuit imprimé du téléphone mobile, soit dans la CPU (unité centrale de traitement) ou encore dans un composant réalisé par le constructeur du téléphone. Cette clé secrète est dite non modifiable car, si elle doit être modifiée, elle ne peut l'être que de manière sûre, en usine, par le constructeur lui-même.

Lors de la fabrication des téléphones mobiles, une clé secrète est introduite à l'origine dans chaque téléphone mobile. Cette clé secrète est appairée avec l'IMEI du téléphone. On peut utiliser, par exemple, cette clé secrète comme clé secrète de chiffrement, dans le procédé de l'invention.

Parallèlement, la clé secrète est mémorisée dans la seconde base de données du serveur de données C. L'IMEI de chaque téléphone mobile permet de retrouver, dans la base de données, la clé secrète qui lui est propre.

Lorsqu'elles ont été chiffrées par l'algorithme de chiffrement et la clé secrète KS, les informations sont transmises par le téléphone mobile à l'ordinateur (étape E6) puis retransmises par l'ordinateur au serveur C. L'IMEI du téléphone mobile est transmis en même temps que ces informations. L'IMEI est transmis non chiffré au serveur C, car c'est lui qui permet, au serveur, de retrouver, dans sa seconde base de données, toutes les données nécessaires pour permettre la poursuite de la transaction entre le serveur et le téléphone mobile et, en particulier, la clé secrète KS permettant de déchiffrer les autres informations.

En même temps que ces informations chiffrées (INFOS)_{KS} et que l'IMEI, l'ordinateur transmet (étape E7) au serveur C des informations, appelées INFOS PC, relatives à l'utilisateur ou à l'ordinateur telles que, par exemple, des informations contenues dans la carte SIM.

Dès qu'il reçoit ces informations ((INFOS)_{KS}, INFOS PC et IMEI), le serveur C vérifie si ces informations sont correctes. Pour cela, il recherche tout d'abord, dans sa base de données, s'il est en possession d'informations sur ce téléphone mobile (étape E8). Autrement dit, il vérifie si l'IMEI reçu existe déjà dans sa base de données.

Si l'IMEI n'existe pas ou s'il n'y a aucune information enregistrée pour cet IMEI, alors, le serveur C envoie un message à l'ordinateur spécifiant que le téléchargement des données de mise à jour n'est pas possible pour ce téléphone mobile.

Si l'IMEI existe, le serveur C recherche les informations qui ont été mémorisées, dans sa base de données, pour le téléphone ayant cet IMEI. Ensuite, le serveur déchiffre (étape E9) les informations qu'il a reçues chiffrées du téléphone mobile et compare chacune de ces informations avec les informations mémorisées dans sa base de données. Il vérifie ainsi si les données reçues de l'ordinateur correspondent bien à celles connues et mémorisées par le constructeur.

Si les informations reçues du téléphone mobile correspondent bien aux informations qui étaient mémorisées dans sa base de données, le serveur C recherche le ou les fichiers contenant les données de mise à jour demandées (étape E10). Ces fichiers sont appelés SOFT. Ils sont mémorisés dans la première base de données du serveur. Ces fichiers comportent, en plus des données de mise à jour, un programme d'exécution nécessaire à la mise en place des données de mise à jour.

Ces fichiers SOFT sont cryptés par le serveur du constructeur avant d'être transmis au téléphone mobile, via l'ordinateur. Le cryptage des fichiers SOFT comprend une signature des fichiers SOFT puis un chiffrement de ces fichiers SOFT signés. La signature des fichiers SOFT correspond à un certificat qui certifie que les fichiers SOFT sont bien émis par le serveur C du constructeur. Ce certificat peut consister en un mot qui est associé aux fichiers SOFT. Cette signature est réalisée au moyen d'un algorithme de signature et d'une clé constructeur KC. Cette clé constructeur est une clé publique, déterminée à partir de la clé secrète KS.

Dans une première variante, la clé constructeur KC est transmise au téléphone mobile, soit par un message indépendant, soit dans le certificat lui-même.

Dans une seconde variante, la clé constructeur est déterminée également par le téléphone mobile à partir de la clé secrète KS. Il faut noter, qu'à l'inverse, la clé secrète ne peut être déduite à partir de la clé constructeur KC.

Dans une troisième variante, la clé constructeur KC est mémorisée « en dur » dans le téléphone mobile, comme la clé secrète KS, c'est-à-dire que la clé constructeur est non modifiable.

Le chiffrement des fichiers SOFT signés (SOFT)_{KC} est réalisé au moyen d'un algorithme de chiffrement et d'une clé de chiffrement. De préférence, la clé de chiffrement est la clé secrète KS, utilisée par le téléphone mobile pour chiffrer ses informations d'identité.

Une fois signés puis chiffrés, les fichiers ((SOFT)_{KC})_{KS} sont transmis, par le serveur, à l'ordinateur (étape E11) puis, par l'ordinateur, au téléphone mobile (étape E12). Pour déchiffrer ces fichiers ((SOFT)_{KC})_{KS}, le téléphone mobile utilise un algorithme de déchiffrement qui, de préférence, est un algorithme symétrique et, par conséquent, est le même que l'algorithme de chiffrement. Il utilise également la clé constructeur KC (qu'il a en mémoire ou qu'il a reçu dans un message du serveur ou bien qu'il a déterminé à partir de la clé secrète). Une fois qu'il a déchiffré (étape E13) les fichiers (SOFT)_{KC}, le téléphone mobile vérifie la signature (étape E14), c'est-à-dire qu'il vérifie si les fichiers SOFT reçus proviennent bien du serveur du constructeur. Autrement dit, il vérifie si le mot formé par la signature correspond bien au mot attendu, mémorisé dans la mémoire flash du téléphone.

Si la signature est vérifiée, alors le téléphone mobile télécharge les données de mise à jour (étape E15). Autrement dit, le téléphone mobile effectue le rétrofit.

Dans une variante préférée de l'invention, le téléphone mobile envoie ensuite, à l'ordinateur PC, le résultat de son téléchargement (étape E16) dès que le rétrofit est effectué, c'est-à-dire qu'il transmet à l'ordinateur un message OK lui indiquant qu'il a bien reçu les fichiers SOFT, qu'il les a bien déchiffrés et qu'il a bien vérifié leur signature. Ce résultat peut ensuite être retransmis, par l'ordinateur, au serveur C. Au contraire, si un problème intervient lors du téléchargement des mises à jour, le téléphone mobile envoie un message NOK indiquant que les données ne sont pas mises à jour.

A la réception du message OK par le serveur C, une information peut être introduite dans la seconde base de données, en correspondance avec l'IMEI du téléphone mobile, pour indiquer que la mise à jour des données a déjà été effectuée pour ce téléphone mobile. Ainsi, si une nouvelle demande de téléchargement identique se présente, le serveur C saura que la mise à jour a déjà été réalisée par ce téléphone mobile. Le serveur C peut alors envoyer un message indiquant qu'une nouvelle mise à jour n'est pas possible.

Si la signature n'est pas vérifiée, alors le téléphone mobile envoie à l'ordinateur un message indiquant que la signature n'a pu être vérifiée.

Ceci est possible grâce à un protocole de communication mémorisé dans la mémoire flash du téléphone mobile. Ce protocole est invariant et non effaçable. Il permet au serveur de réinitialiser toute la procédure si celle-ci a été avortée prématurément. En effet, si l'utilisateur effectue une mauvaise opération lors de la demande de téléchargement ou bien si la transmission des fichiers SOFT s'effectue de façon défectueuse, alors le protocole de communication se met en place pour prévenir le serveur qu'il y a eu une défection, c'est-à-dire que la procédure a été avortée. Le serveur C annule alors la transaction en cours et propose au téléphone mobile de faire un autre essai de téléchargement. Le procédé peut alors recommencer soit depuis le début avec le transfert de l'application du serveur vers l'ordinateur, soit à une étape intermédiaire du procédé qui dépend de l'endroit où la procédure a été interrompue.

Ce protocole de communication peut intervenir à n'importe quel moment de la procédure.

Dans le procédé de l'invention qui vient d'être décrit, l'ordinateur sert de moyen de stockage intermédiaire. En effet, comme expliqué précédemment, l'ordinateur reçoit tout d'abord l'application envoyée par le serveur C et exécute cette application. Il envoie ensuite au téléphone mobile uniquement la demande d'informations qui était contenue dans l'application. Ainsi, le téléphone mobile n'a pas besoin de stocker cette application, ni de l'exécuter. Cela permet d'économiser une place mémoire considérable pour le téléphone mobile. Par la suite, l'ordinateur stocke la totalité des fichiers SOFT signés et chiffrés. Il retransmet ces fichiers, bloc par bloc, au téléphone mobile de sorte que le téléphone mobile puisse traiter les données reçues au fur et à mesure de leur arrivée, en fonction de ses capacités mémoire. Le téléphone mobile peut ainsi mettre à jour son logiciel sans saturer sa propre mémoire et sans risquer que le téléchargement ne soit interrompu pour des raisons de mémoire insuffisante.

Dans ce cas, 4 Mo de mémoire flash sont suffisants pour mémoriser les données de mise à jour car, même si celles-ci nécessitent une place mémoire approchant les 4 Mo, aucune place mémoire n'est nécessaire pour l'application.

Avec le procédé de l'invention, la mémoire flash du téléphone mobile doit uniquement contenir un algorithme de chiffrement, un algorithme de déchiffrement qui, de préférence, est identique à l'algorithme de chiffrement (algorithme symétrique), le mot attendu lors de la vérification de la signature, la clé constructeur KC et le protocole de communication. Ces éléments ne nécessitant pas une grande place mémoire, la plus grande partie de la mémoire flash peut être utilisée pour mémoriser les données de mise à jour.

Dans la description qui précède, il est décrit un téléphone mobile relié à un ordinateur. Toutefois, le procédé de l'invention peut être mis en oeuvre pour tout type de mémoire auxiliaire connectée au téléphone mobile. Cette mémoire auxiliaire peut être, par exemple, une mémoire supplémentaire implémentée dans le téléphone mobile. Il faut simplement que cette mémoire soit capable de mémoriser les données de mise à jour et d'exécuter les applications.

Comme expliqué précédemment, le procédé de l'invention peut être mis en oeuvre par un particulier, pour la mise à jour du logiciel de son téléphone mobile. Le procédé de l'invention peut aussi être mis en oeuvre par un centre de réparation agréé par le constructeur, appelé CRA. Dans ce cas, plusieurs logiciels de téléphones mobiles peuvent être mis à jour en effectuant une seule fois le transfert des fichiers SOFT du serveur vers l'ordinateur. Les logiciels des téléphones mobiles sont ensuite mis à jour successivement en se connectant, tour à tour, à l'ordinateur du CRA.

En effet, avec le procédé tel qu'il vient d'être décrit, pour mettre à jour plusieurs téléphones mobiles à jour, il faudrait que chaque utilisateur d'un téléphone mobile mette à jour son propre téléphone mobile. Or, un centre de réparation (CRA) a souvent plusieurs téléphones mobiles d'un même constructeur à mettre à jour. Si le CRA devait effectuer un téléchargement de 4 MO pour chaque téléphone mobile séparément, cela multiplierait les 4 Mo d'informations transmises sur le réseau Internet par autant de fois qu'il y a de téléphones mobiles à mettre à jour. L'invention propose donc un mode de réalisation dans lequel le CRA peut télécharger les données de mise à jour une fois et permettre ensuite, à chaque téléphone mobile, de télécharger ces données de mise à jour.

Comme on le verra par la suite, ce procédé permet, lorsqu'il y a plusieurs téléphones mobiles de limiter la quantité de données à transmettre sur Internet et, par conséquent, de gagner du temps de transmission. Autrement dit, un centre de réparation a la possibilité de télécharger, depuis le serveur du constructeur, un logiciel générique contenant les données de mise à jour et de mémoriser, dans son ordinateur, ce logiciel générique. Ce logiciel générique est transmis par le serveur, sous une forme cryptée, à l'ordinateur du CRA, qui le mémorise sous sa forme cryptée. L'ordinateur peut ensuite transmettre à chaque téléphone mobile les données de mise à jour contenues dans le logiciel générique.

Le système pour mettre en oeuvre le second mode de réalisation du procédé de l'invention est le même que celui représenté sur la figure 1. La seule différence est que, dans le premier mode de réalisation, l'ordinateur 2 est un ordinateur individuel appartenant à un particulier désirant mettre à jour son téléphone mobile. Dans le second mode de réalisation, l'ordinateur 2 est un ordinateur professionnel appartenant au CRA. Les éléments utilisés pour la description du second mode de réalisation du procédé de l'invention sont donc identiques à ceux utilisés pour la description du premier mode de réalisation, excepté que l'ordinateur 2 est un ordinateur professionnel. Dans la description qui suit cet ordinateur 2 sera appelé ordinateur du CRA.

Lors de la fabrication de ses téléphones mobiles, chaque constructeur de téléphones mobiles attribue, à chaque téléphone mobile, un numéro d'identification du téléphone mobile, appelé IMEI. De plus, chaque téléphone mobile appartient à une même famille de téléphones mobiles ayant des caractéristiques identiques. Le constructeur attribue aussi, à chaque téléphone mobile, un numéro de famille F qui est le même pour tous les téléphones d'une même famille.

Par ailleurs, chaque CRA comporte un numéro d'identification du CRA.

Le procédé de l'invention, dans son second mode de réalisation, propose de fournir, à l'ordinateur du CRA, un logiciel générique comportant des données de mise à jour téléchargeables sur tous les téléphones mobiles d'une même famille. Pour être sûr que les données de mise à jour ne puissent être téléchargées que par les téléphones d'une famille choisie, le procédé de l'invention propose que ces données de mise à jour soient transmises sous une forme cryptée, par le serveur du constructeur C à l'ordinateur du CRA, puis par l'ordinateur du CRA aux téléphones mobiles.

Plus précisément, le second mode de réalisation du procédé de l'invention comporte les étapes qui vont être décrites maintenant.

L'ordinateur du CRA demande au serveur C de lui transférer un logiciel générique pour une famille choisie (étape E20). Le serveur C vérifie d'abord si le CRA est bien autorisé à recevoir le logiciel demandé (étape E21). Pour cela, il vérifie si le numéro d'identification du CRA est un numéro connu de lui, c'est-à-dire enregistré dans sa seconde base de données. Il vérifie aussi si le numéro de famille correspond bien à un numéro enregistré dans sa seconde base de données. Si ce n'est pas le cas, le serveur envoie à l'ordinateur du CRA un message d'erreur. Par contre, si c'est bien le cas, alors le serveur C génère une clé de famille KF et mémorise cette clé KF dans sa seconde base de données. Cette clé de famille est générée en fonction du numéro d'identification du CRA et du numéro d'identification de la famille de téléphones mobiles.

Lorsque cette clé de famille KF a été générée (étape E21), alors le serveur recherche, dans sa première base de données, le logiciel générique demandé (étape E22). Ce logiciel générique est un ou plusieurs fichiers, appelés fichiers SOFT, associés à une application contenant un programme à exécuter.

La clé de famille KF est utilisée en association avec un algorithme de famille, appelé ALGO, mémorisé dans le serveur. Cet algorithme de famille et cette clé de famille permettent au serveur C de chiffrer les fichiers SOFT avant de les transmettre à l'ordinateur du CRA.

Ainsi chiffrés, les fichiers SOFT sont incompréhensibles pour le téléphone mobile lui-même, car ce dernier ne connaît ni la clé de famille, ni l'algorithme permettant de déchiffrer les fichiers SOFT chiffrés.

En outre, comme dans le premier mode de réalisation, les fichiers SOFT sont signés avant d'être chiffrés. La signature de ces fichiers SOFT par un algorithme de signature et une clé constructeur KC est identique à la signature des fichiers SOFT décrite dans le premier mode de réalisation. La signature des fichiers SOFT ne sera donc pas décrite ici en détail.

Le serveur C transmet les fichiers SOFT signés et chiffrés (c'est-à-dire cryptés) ainsi que l'application contenant le programme d'exécution à l'ordinateur du CRA (étape E23).

A réception des fichiers signés et chiffrés ((SOFT)_{KC})_{KF} et de l'application, l'ordinateur du CRA mémorise les fichiers sous leur forme signée et chiffrée. L'ordinateur du CRA ne connaît pas la clé de famille ; il n'a pas besoin de la connaître car il n'a pas à déchiffrer ces fichiers. Il les mémorise simplement.

Ensuite, l'ordinateur du CRA exécute le programme d'exécution contenu dans l'application (étape E24). Ce programme contient une demande d'informations relatives au téléphone mobile connecté à l'ordinateur du CRA. Les informations demandées sont les même que celles demandées dans le premier mode de réalisation. L'ordinateur transmet cette demande (étape E25) au téléphone mobile qui recherche, dans sa mémoire, ces informations INFOS et, en particulier, son IMEI. Comme dans le premier mode de réalisation, le téléphone mobile chiffre les informations, autres que l'IMEI, au moyen d'un algorithme de chiffrement et d'une clé secrète KS (étape E26). Cette clé secrète KS est la même que la clé secrète décrite dans le premier mode de réalisation de l'invention. Une fois chiffrées, le téléphone mobile transmet (étape E27) ces informations (INFOS)_{KS} à l'ordinateur du CRA ainsi que son IMEI. L'ordinateur du CRA retransmet (étape E28) ces informations chiffrées (INFOS)_{KS} et cet IMEI au serveur C. En même temps qu'il retransmet ces informations, l'ordinateur transmet des informations qui lui sont propres et, en particulier, son numéro d'identification de CRA (ID_{CRA}).

A réception de ces diverses informations, le serveur déchiffre (étape E29) les informations chiffrées (INFOS)_{KS}, puis détermine, en fonction de ces informations, de l'IMEI et de l'identité du CRA, la famille F de téléphones mobiles dont il s'agit ainsi que le centre de réparation qui envoie ces informations. Il interroge alors la seconde base de données pour savoir si une clé KF existe déjà pour cette famille F de téléphones mobiles. Si cette clé existe, alors le serveur C vérifie que l'IMEI reçu est bien mémorisé dans la base de données et que cet IMEI fait bien partie de la famille F (étape E30).

De même, le serveur C vérifie que les informations d'identités du CRA sont bien identiques à celles mémorisées dans sa seconde base de données. Si c'est le cas, alors il considère que la famille F de téléphones mobiles a été authentifiée. L'échange d'informations entre le serveur C et le téléphone mobile, via l'ordinateur du CRA, peut alors se poursuivre.

Lorsque la famille a été authentifiée, le serveur génère (étape E31) un algorithme de famille inverse (ALGO)⁻¹ qui permet de déchiffrer, avec la clé de famille KF, les informations reçues sous une forme chiffrée par l'algorithme de famille et la clé de famille.

Le serveur transmet alors (étape 32), à l'ordinateur du CRA :
- d'une part, la clé de famille KF qui permettra au téléphone mobile de déchiffrer le fichier signé et chiffré ((SOFT)_{KC})_{KF} que l'ordinateur du CRA va lui transmettre. Cette clé de famille KF est transmise par le serveur sous une forme cryptée. Comme précédemment, le cryptage consiste en une signature de la clé de famille KF par un algorithme de signature et une clé constructeur KC puis en un chiffrement de la clé signée (KF)_{KC} par un algorithme de chiffrement et une clé secrète KS connue à la fois du serveur C et du téléphone mobile.
- d'autre part, l'algorithme de famille inverse (ALGO)⁻¹ qui permettra au téléphone mobile de déchiffrer les informations chiffrées par l'algorithme de famille et la clé KF. Cet algorithme (ALGO)⁻¹ est également transmis sous une forme cryptée à l'ordinateur du CRA, c'est-à-dire qu'il est signé par un algorithme de signature et la clé constructeur KC puis chiffré par un algorithme de chiffrement et la clé secrète KS.

Lorsqu'il reçoit la clé de famille et l'algorithme de famille inverse signés et chiffrés, l'ordinateur les retransmet (étape E33) au téléphone mobile tels qu'il les a reçus, c'est-à-dire sous leur forme signée et chiffrée.

L'ordinateur du CRA transmet, au téléphone mobile, les fichiers signés et chiffrés ((SOFT)_{KC})_{KF} en même temps que la clé de famille signée et chiffrée ((KF)_{KC})_{KS} et que l'algorithme de famille inverse signé et chiffré (((ALGO)⁻¹)_{KC})_{KS}.

Le téléphone mobile a, alors, en sa possession tous les éléments nécessaires à sa mise à jour. Il lui suffit de déchiffrer et de vérifier la signature de chacun de ces éléments. Cependant, le déchiffrement de ces éléments se fait dans un ordre particulier. En effet, le téléphone mobile doit d'abord déchiffrer la clé de famille et l'algorithme de famille inverse avant de pouvoir déchiffrer les fichiers SOFT.

Plus précisément, le téléphone mobile déchiffre tout d'abord la clé de famille chiffrée en utilisant, comme dans le premier mode de réalisation, un algorithme de déchiffrement mémorisé dans sa mémoire flash et la clé secrète KS également mémorisée dans le téléphone mobile. Le téléphone mobile vérifie ensuite la signature de la clé de famille ainsi déchiffrée (étape E34).

Si cette signature correspond bien au mot attendu par le téléphone mobile, alors le téléphone mobile déchiffre l'algorithme de famille inverse. Lorsque l'algorithme est déchiffré, le téléphone mobile vérifie la signature de l'algorithme de famille inverse (étape E35). Comme précédemment, si la signature correspond bien au mot attendu, alors le téléphone mobile mémorise l'algorithme de famille inverse (étape E36). Ensuite, il utilise cet algorithme et la clé de famille pour déchiffrer les fichiers SOFT (étape E37). Lorsque ces fichiers SOFT ont été déchiffrés, le téléphone vérifie la signature de ces fichiers SOFT et, si la signature est correcte, télécharge, dans sa mémoire flash, les données de mise à jour contenues dans les fichiers SOFT (étape E38).

Il est à noter que l'ordre de déchiffrement et de vérification des signatures de la clé de famille KF et de l'algorithme de famille inverse (ALGO)⁻¹ peut être inversé. Il est donc possible de déchiffrer et de vérifier la signature de l'algorithme de famille inverse avant de déchiffrer et de vérifier la signature de la clé de famille. Dans ce cas, l'algorithme de famille inverse est téléchargé avant de déchiffrer la clé de famille.

La clé de famille et l'algorithme de famille sont transmis par le serveur au téléphone mobile, via l'ordinateur, sous la forme de programmes à exécuter, de sorte que, dès qu'ils ont été décryptés par le téléphone mobile, ils sont exécutables.

Dans une variante préférée de l'invention, le téléphone mobile envoie ensuite le résultat de son téléchargement à l'ordinateur du CRA, qui peut ainsi savoir si le téléchargement a été correctement effectué (étape E39).

Ainsi, si l'on considère que les fichiers SOFT signés et chiffrés ont une taille d'environ 4 Mo, la transmission sur Internet, entre le serveur C et l'ordinateur du CRA, de ces fichiers de Mo ne se fait qu'une seule fois quel que soit le nombre de téléphones mobiles à mettre à jour. La seule transmission sur Internet qui se répète pour chaque téléphone mobile connecté à l'ordinateur du CRA est la transmission de la clé de famille et de l'algorithme de famille inverse, signés et chiffrés. Or, la clé de famille et de l'algorithme de famille inverse, signés et chiffrés, ont une taille mémoire de l'ordre de 100 Ko. Ainsi, dès lors qu'il y a au moins deux téléphones mobiles à mettre à jour, il est intéressant d'utiliser le second mode de réalisation du procédé de l'invention, car dans ce cas on transmet par Internet uniquement (4 Mo + 2 * 100 Ko) au lieu de 2 * 4 Mo, avec le premier mode de réalisation de l'invention. On comprend ainsi, que plus le nombre de téléphones mobiles à mettre à jour est grand, plus on économise la quantité de données transférées sur le réseau Internet entre l'ordinateur du CRA et le serveur du constructeur et, par conséquent, le temps de connexion au site du constructeur.

Quel que soit le mode de réalisation du procédé de l'invention, la transmission des données de mise à jour entre l'ordinateur et le téléphone mobile peut se faire par bloc par bloc. En effet, les données de mise à jour peuvent être importantes ; dans ce cas, l'ordinateur les transmet bloc par bloc au téléphone mobile qui mémorise ces données au fur et à mesure de leur arrivée. Pour cela, chaque bloc comporte une en-tête indiquant la longueur de l'information qu'il contient. Ainsi, le téléphone mobile connaît la longueur de l'information qu'il doit stocker avant de vérifier la signature et de déchiffrer l'information. Chaque bloc comporte aussi une donnée de fin de bloc, qui précise si les données contenues dans le bloc sont des données du type exécutable ou bien si ce sont des données à stocker dans la mémoire flash. Autrement dit, cette donnée de fin de bloc précise au téléphone mobile s'il s'agit de données exécutables ou bien s'il s'agit d'une partie des données de mise à jour.

Quel que soit son mode de réalisation, ce procédé permet de modifier le logiciel du téléphone mobile au fur et à mesure des évolutions. Il permet, en particulier, de modifier les fonctionnalités du téléphone mobile (tel que des paramétrages, des réglages etc.). Il permet également de télécharger des jeux ou des sonneries proposés par le constructeur du téléphone. Il permet aussi de réparer une défaillance du logiciel implanté dans le téléphone mobile ou bien de modifier le logiciel implémenté au fur et à mesure des évolutions de la norme (par exemple de la norme GPRS qui évolue très rapidement).

Quel que soit le motif de la mise à jour, celle-ci peut se faire sans risque pour l'utilisateur puisque la mémoire flash du téléphone n'est jamais en liaison directe avec le serveur. Toutes les opérations sont effectuées à partir de l'ordinateur et toutes les informations sont réceptionnées par l'ordinateur. L'utilisateur (particulier ou responsable du CRA) n'a aucune opération à effectuer avec le téléphone mobile. Le téléphone mobile se contente d'exécuter les données exécutables reçues de l'ordinateur et de mémoriser les données de mise à jour. Les éventuelles erreurs de manipulation que peut faire l'utilisateur sont forcément réalisées à partir de l'ordinateur. Si une telle erreur survient, alors il suffit à l'utilisateur de demander l'annulation de la procédure et de recommencer la procédure, comme expliqué précédemment. Toutefois, pour limiter encore les risques d'erreur ou de mauvaise manipulation lors de la mise à jour des données, le procédé peut prévoir que l'utilisateur ait simplement à lancer une exécution d'un programme, à fournir les informations qui lui sont demandées et à lancer le transfert. Une barre de progression peut fournir à l'utilisateur une information relative à l'avancement du travail. Lorsque le transfert est terminé, un message peut informer l'utilisateur que les données sont téléchargées.

Ce procédé offre aussi l'avantage de permettre une traçabilité complète de chaque téléphone mobile. On peut ainsi connaître, par exemple, l'IMEI renseigné en usine lors de la fabrication du téléphone mobile, une description mécanique renseignée en usine, une description électronique renseignée en usine, une date de fabrication, la clé secrète également renseignée en usine, et la version du logiciel intégré dans le téléphone.

## Revendications

1. Procédé de mise à jour à distance d'un logiciel embarqué dans un téléphone mobile (1), dans lequel le téléphone mobile télécharge des données de mise à jour (SOFT) mémorisées dans une première base de données d'un serveur de données (C) par l'intermédiaire d'une mémoire d'ordinateur (2) connectée à une mémoire flash du téléphone mobile, **caractérisé en ce que** :
- le téléchargement des données de mise à jour est demandé par un utilisateur du téléphone mobile au serveur de données, lorsque l'utilisateur souhaite mettre à jour son téléphone mobile,
- à réception de cette demande, le serveur transmet une application de gestion de dialogue à la mémoire d'ordinateur,
- la mémoire d'ordinateur exécute cette application et transmet au téléphone mobile une demande d'informations d'identité contenue dans ladite application,
- le téléphone mobile transmet les informations d'identité demandées au serveur, par l'intermédiaire de la mémoire d'ordinateur,
- le serveur vérifie ces informations par comparaison avec des informations d'identité mémorisées dans une seconde base de données dudit serveur et transmet les données de mise à jour à la mémoire d'ordinateur,
- la mémoire d'ordinateur stocke les données de mise à jour et transmet lesdites données de mise à jour à la mémoire flash du téléphone mobile.

2. Procédé de mise à jour selon la revendication 1, **caractérisé en ce que** les données de mise à jour sont transmises (E11) par le serveur à l'ordinateur après authentification (E4 - E9) du téléphone mobile par le serveur, cette authentification comportant une recherche et un chiffrement des informations d'identité par le téléphone mobile (E5, E6) ainsi qu'un déchiffrement et une vérification de ces informations d'identité par le serveur (E9).

3. Procédé selon la revendication 2, **caractérisé en ce que** la mémoire flash du téléphone mobile établit l'authentification du téléphone mobile auprès du serveur pendant que la mémoire d'ordinateur enregistre les données de mise à jour et des programmes d'exécution.

4. Procédé de mise à jour selon la revendication 2 ou 3, **caractérisé en ce que** le serveur transmet (E10, E11) les données de mise à jour sous une forme cryptée à l'ordinateur, qui retransmet ces données de mise à jour cryptées au téléphone mobile.

5. Procédé de mise à jour selon la revendication 4, **caractérisé en ce que** le cryptage comprend un chiffrement des données de mise à jour et une signature de ces données chiffrées.

6. Procédé de mise à jour selon l'une des revendications 1 à 5, **caractérisé en ce que** les données de mise à jour sont transmises bloc par bloc de l'ordinateur au téléphone mobile.

7. Procédé de mise à jour selon l'une des revendications 4 à 6, **caractérisé en ce que** le chiffrement et le déchiffrement sont réalisés au moyen d'un algorithme symétrique à clé secrète (KS).

8. Procédé de mise à jour selon la revendication 7, **caractérisé en ce que** chaque téléphone mobile a une clé secrète particulière, connue du serveur.

9. Procédé de mise à jour selon la revendication 1, **caractérisé en ce que** plusieurs téléphones mobiles forment une même famille (F), chaque téléphone mobile de la famille étant connecté successivement à une même mémoire d'ordinateur.

10. Procédé de mise à jour selon la revendication 9, **caractérisé en ce que** les données de mise à jour sont transmises (E23), par le serveur à l'ordinateur, sous une forme chiffrée au moyen d'une clé de famille (KF) générée par le serveur.

11. Procédé de mise à jour selon la revendication 10, **caractérisé en ce que** la clé de famille est transmise au téléphone mobile (E32) après authentification (E25 - E30) par le serveur, de la famille de téléphones mobiles.

12. Procédé de mise à jour selon la revendication 11, **caractérisé en ce que** un algorithme de famille (ALGO⁻¹) est transmis au téléphone mobile en même temps que la clé de famille.

13. Procédé de mise à jour selon l'une des revendications 10 à 12, **caractérisé en ce que** la clé de famille et l'algorithme de famille sont transmis par le serveur sous une forme cryptée.

14. Procédé de mise à jour selon la revendication 13, **caractérisé en ce que** le cryptage de la clé de famille et/ou de l'algorithme de famille comprend un chiffrement de la clé de famille et/ou de l'algorithme de famille par une clé secrète et une signature de la clé de famille chiffrée et/ou de l'algorithme de famille chiffré.

15. Procédé de mise à jour selon l'une des revendications 9.à 14, **caractérisé en ce que** l'ordinateur est un élément d'un centre de réparation de téléphones mobiles.

16. Système de mise à jour à distance d'un logiciel embarqué dans un téléphone mobile (1), **caractérisé en ce qu**'il comprend des moyens pour mettre en oeuvre le procédé selon l'une quelconque des revendications 1 à 15.

## Claims

1. - A method for remotely updating software loaded into a mobile telephone (1), in which the mobile telephone downloads update data (SOFT) stored in a primary database of a data server (C) through a computer memory (2) connected to a flash memory of the mobile telephone, **characterised in that**:
- the downloading of update data is requested by a mobile telephone user from the data server, when the user wishes to update his mobile telephone,
- on receipt of this request, the server transmits an application for dialogue management to the computer memory,
- the computer memory runs this application and transmits to the mobile telephone a request for the identity information held in the said application,
- the mobile telephone transmits the requested identity information to the server, through the computer memory,
- the server verifies this information by comparison with the identity information memorised in a second data base of the said server and transmits the update data to the computer memory,
- the computer memory stores the update data and transmits the said update data to the flash memory of the mobile telephone.

2. - A method for updating in accordance with claim 1, **characterised in that** the update data is transmitted (E11) by the server to the computer after authentication (E4 - E9) of the mobile telephone by the server, this authentication comprising a search and an encryption of the identity information by the mobile telephone (E5, E6) as well as a decoding and a verification of this identity information by the server (E9).

3. - A method for updating in accordance with claim 2, **characterised in that** the flash memory of the mobile telephone establishes the authentication of the mobile telephone with the server while the computer memory records the update data and the execution programmes.

4. - A method for updating in accordance with claim 2 or 3, **characterised in that** the server transmits (E10, E11) the update data under an encrypted format to the computer, which retransmits this encrypted update data to the mobile telephone.

5. - A method for updating in accordance with claim 4, **characterised in that** the encrypting includes a coding of the update data and a signature of this encrypted data.

6. - A method for updating in accordance with one of the claims 1 to 5, **characterised in that** the update data is transmitted block by block from the computer to the mobile telephone.

7. - A method for updating in accordance with one of the claims 4 to 6, **characterised in that** the coding and the decoding are carried out by means of a symmetric algorithm with a secret key (KS).

8. - A method for updating in accordance with claim 7, **characterised in that** each mobile telephone has a specific secret key, known to the server.

9. - A method for updating in accordance with claim 1, **characterised in that** several mobile telephones are part of the same family (F), each mobile telephone in the family being able to be connected successively to a same computer memory.

10. - A method for updating in accordance with claim 9, **characterised in that** the update data is transmitted (E23), by the server to the computer, under an encrypted format by means of a family key (KF) generated by the server.

11. - A method for updating in accordance with claim 10, **characterised in that** the family key is transmitted to the mobile telephone (E32) after authentication (E25 - E30) by the server, of the family of mobile telephones.

12. - A method for updating in accordance with claim 11, **characterised in that** a family algorithm (ALGO⁻¹) is transmitted to the mobile telephone at the same time as the family key.

13. - A method for updating in accordance with one of the claims 10 to 12 **characterised in that** the family key and the family algorithm are transmitted by the server under an encrypted format.

14. - A method for updating in accordance with claim 13 **characterised in that** the encoding of the family key and/or the family algorithm includes an encryption of the family key and/or the family algorithm by a secret key and a signature of the encoded family key and/or the encoded family algorithm.

15. - A method for updating in accordance with one of the claims 9 to 14, **characterised in that** the computer is a part of a mobile telephone repair centre.

16. - A system for remotely updating software loaded into a mobile telephone (1), **characterised in that** it comprises the means for putting into operation the method in accordance with one of any of the claims 1 to 15.

## Patentansprüche

1. - Fernprogrammierungsverfahren eines Mobiltelefons (1), bei dem das Mobiltelefon Programmierungsdaten (SOFT) herunterlädt, die in einer ersten Datenbank eines Datenservers (C) gespeichert sind, mittels eines Computerspeichers (2), der mit einem Flash-Speicher des Mobiltelefons verbunden ist, das **dadurch gekennzeichnet ist, dass**:
- dem Datenserver das Herunterladen der Programmierungsdaten von einem Benutzer des Mobiltelefons befohlen wird, wenn der Benutzer die Software seines Mobiltelefons aktualisieren will,
- der Server bei Empfang dieses Befehls dem Computerspeicher eine Dialogverwaltungsanwendung übermittelt,
- der Computerspeicher diese Anwendung ausführt und dem Mobiltelefon eine Anfrage zur Information über die Identität übermittelt, die in der besagten Anwendung enthalten ist,
- das Mobiltelefon dem Server die angeforderten Informationen über die Identität mittels Computerspeicher übermittelt,
- der Server diese Informationen überprüft, indem er sie mit den Informationen über die Identität vergleicht, die in einer zweiten Datenbank des besagten Servers gespeichert sind, und dem Computerspeicher die Programmierungsdaten übermittelt,
- der Computerspeicher die Programmierungsdaten ablegt und die besagten Programmierungsdaten dem Flash Speicher des Mobiltelefons übermittelt.

2. - Programmierungsverfahren nach Anspruch 1, das **dadurch gekennzeichnet ist, dass** die Programmierungsdaten vom Server an den Computer nach Authentisierung (E4-E9) des Mobiltelefons durch den Server übermittelt (E11) werden, wobei diese Authentisierung eine Suche und eine Chiffrierung der Informationen über die Identität durch das Mobiltelefon (E5, E6) und eine Dechiffrierung und eine Überprüfung dieser Informationen über die Identität durch den Server (E9) enthält.

3. - Verfahren nach Anspruch 2, das **dadurch gekennzeichnet ist, dass** der Flash Speicher des Mobiltelefons eine Authentisierung des Mobiltelefons beim Server erstellt, während der Computerspeicher die Programmierungsdaten und die Daten der Ausführungsprogramme speichert.

4. - Programmierungsverfahren nach Anspruch 2 oder 3, das **dadurch gekennzeichnet ist, dass** der Server die Programmierungsdaten dem Computer in verschlüsselter Form übermittelt (E10, E11), der wiederum diese verschlüsselten Programmierungsdaten dem Mobiltelefon übermittelt.

5. - Programmierungsverfahren nach Anspruch 4, das **dadurch gekennzeichnet ist, dass** die Verschlüsselung eine Chiffrierung der Programmierungsdaten und eine Signatur dieser chiffrierten Daten enthält.

6. - Programmierungsverfahren nach einem der Ansprüche 1 bis 5, das **dadurch gekennzeichnet ist, dass** die Programmierungsdaten vom Computer blockweise dem Mobiltelefon übermittelt werden.

7. - Programmierungsverfahren nach einem der Ansprüche 4 bis 6, das **dadurch gekennzeichnet ist, dass** die Chiffrierung und die Dechiffrierung mittels eines symmetrischen Algorithmus mit Geheimschlüssel (KS) erfolgen.

8. - Programmierungsverfahren nach Anspruch 7, das **dadurch gekennzeichnet ist, dass** jedes Mobiltelefon über seinen eigenen Geheimschlüssel verfügt, der dem Server bekannt ist.

9. - Programmierungsverfahren nach Anspruch 1, das **dadurch gekennzeichnet ist, dass** mehrere Mobiltelefone eine selbe Gruppe (F) bilden, wobei alle Mobiltelefone der Gruppe jeweils nacheinander mit demselben Computerspeicher verbunden werden.

10. - Programmierungsverfahren nach Anspruch 9, das **dadurch gekennzeichnet ist, dass** die Programmierungsdaten vom Server an den Computer in einer chiffrierten Form mittels eines Gruppenschlüssels (KF) übermittelt (E23) werden, der vom Server generiert wird.

11. - Programmierungsverfahren nach Anspruch 10, das **dadurch gekennzeichnet ist, dass** der Gruppenschlüssel dem Mobiltelefon (E32) nach Authentisierung (E25-E30) der Gruppe von Mobiltelefonen durch den Server übermittelt wird.

12. - Programmierungsverfahren nach Anspruch 11, das **dadurch gekennzeichnet ist, dass** dem Mobiltelefon gleichzeitig mit dem Gruppenschlüssel ein Gruppenalgorithmus (ALGO-¹) übermittelt wird.

13. - Programmierungsverfahren nach einem der Ansprüche 10 bis 12, das **dadurch gekennzeichnet ist, dass** der Gruppenschlüssel und der Gruppenalgorithmus vom Server in verschlüsselter Form übermittelt werden.

14. - Programmierungsverfahren nach Anspruch 13, das **dadurch gekennzeichnet ist, dass** die Verschlüsselung des Gruppenschlüssels und/ oder des Gruppenalgorithmus eine Chiffrierung des Gruppenschlüssels und/ oder des Gruppenalgorithmus durch einen Geheimschlüssel und eine Signatur des chiffrierten Gruppenschlüssels und/ oder des chiffrierten Gruppenalgorithmus enthält.

15. - Programmierungsverfahren nach einem der Ansprüche 9 bis 14, das **dadurch gekennzeichnet ist, dass** der Computer Bestandteil eines Reparaturzentrums für Mobiltelefone ist.

16. - Fernprogrammierungsverfahren eines Mobiltelefons (1), das **dadurch gekennzeichnet ist, dass** es Systeme zur Umsetzung des Verfahrens nach irgendeinem der Ansprüche 1 bis 15 enthält.
